# EUROPÄISCHE PATENTSCHRIFT

(11) **EP 1 334 946 B1**
(45) Veröffentlichungstag und Bekanntmachung des Hinweises auf die Patenterteilung: **02.04.2008**
(21) Anmeldenummer: 03002266.9
(22) Anmeldetag: 01.02.2003
(51) Int. Cl.: B66D 5/08, F16D 51/38, B66D 5/30

(54) **Innenbackenbremse für einen Aufzugsantrieb**
Internal drum brake for a lift drive
Frein à tambour à mâchoire interne pour l'entraînement d'un élévateur

(30) Priorität: 08.02.2002 EP 02405088
(43) Veröffentlichungstag der Anmeldung: 13.08.2003
(73) Patentinhaber: INVENTIO AG, 6052 Hergiswil (CH)
(72) Erfinder: Schneider, Marcel, Masch.-Ing. HTL, 6010 Kriens (CH)

(56) Entgegenhaltungen:
- EP-A- 0 933 325
- DE-A- 19 846 671
- FR-A- 1 545 153
- US-A- 2 407 487
- US-A- 5 255 763

## Beschreibung

Die Erfindung betrifft eine Innenbackenbremse für einen Aufzugsantrieb mit mehr als zwei Bremsbacken, die mittels Druckfedern beaufschlagt eine Bremskraft an einer Bremstrommel erzeugen und die mittels Aktoren lüftbar sind.

Aus der Offenlegungsschrift DE 198 46 671 ist eine solche Bremse, eine Treibscheibenbremse mit erhöhter Redundanz bekannt geworden. Bei wechselnder Drehrichtung im gleichen Masse wirkende Bremseinheiten sind sternförmig zwischen Treibscheibenlagerung und Treibscheibenkranz angeordnet. Tellerfedern einer Bremseinheit wirken auf Betätigungshebel und pressen eine Bremsbacke gegen den Treibscheibenkranz. Zum Lüften der Bremseinheit sind über ein Gabelstück auf die Betätigungshebel wirkende hydraulische oder elektrische Aktoren vorgesehen.

Nachteilig bei der bekannten Einrichtung ist die aufwendige Mechanik einer Bremseinheit. Innenbackenbremsen mit einer derart komplizierten Bremsmechanik sind kaum konkurrenzfähig. Ausserdem wirken die Tellerfedern und der Aktor über mehrere Betätigungshebel auf die Bremsbacke, was höhere Federkräfte bzw. Aktorkräfte erfordert.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Innenbackenbremse mit mehr als zwei Bremsbacken zu schaffen, die trotz einfachem Aufbau zuverlässig arbeitet.

Vorteilhafte Weiterbildungen der Erfindung sind in den abhängigen Patentansprüchen angegeben.

Die durch die Erfindung erreichten Vorteile sind im wesentlichen darin zu sehen, dass die Federkräfte bzw. die Aktorkräfte direkt auf die Bremsbacken wirken. Je Aktor (Bremsmagnet) werden zwei Bremsbacken betätigt, was den mechanischen Aufbau der Innenbackenbremse weiter vereinfacht und eine kompakte Bauweise ermöglicht. Die für die Bremslüftung notwendigen Bremsmagnete sind auf Achshöhe anbringbar. Die Hauptwelle wird nicht zusätzlich belastet. Die Reaktionskräfte der Bremsbacken werden gleichmässig über vier Punkte in das Gehäuse eingeleitet. Mit der erfindungsgemässen Anordnung der Bremsbacken ergeben sich je Bremshälfte unabhängig von der Drehrichtung eine auflaufende Bremsbacke und eine ablaufende Bremsbacke. Bei Ausfall einer Bremshälfte ändert das Bremsmoment bei einer Drehrichtungsänderung nicht.

Anhand der beiliegenden Figuren wird die vorliegende Erfindung näher erläutert.

Es zeigen:
Fig. 1 eine räumliche Darstellung der erfindungsgemässen Innenbackenbremse,
Fig. 2 eine Draufsicht der Innenbackenbremse,
Fig. 3 einen Schnitt entlang der Linie A-A der Fig. 1,
Fig. 4 einen Schnitt entlang der Linie B-B der Fig. 1,
Fig. 5 eine Rückansicht der Innenbackenbremse und
Fig. 6 eine Betätigungseinrichtung zur manuellen Lüftung der Innenbackenbremse.

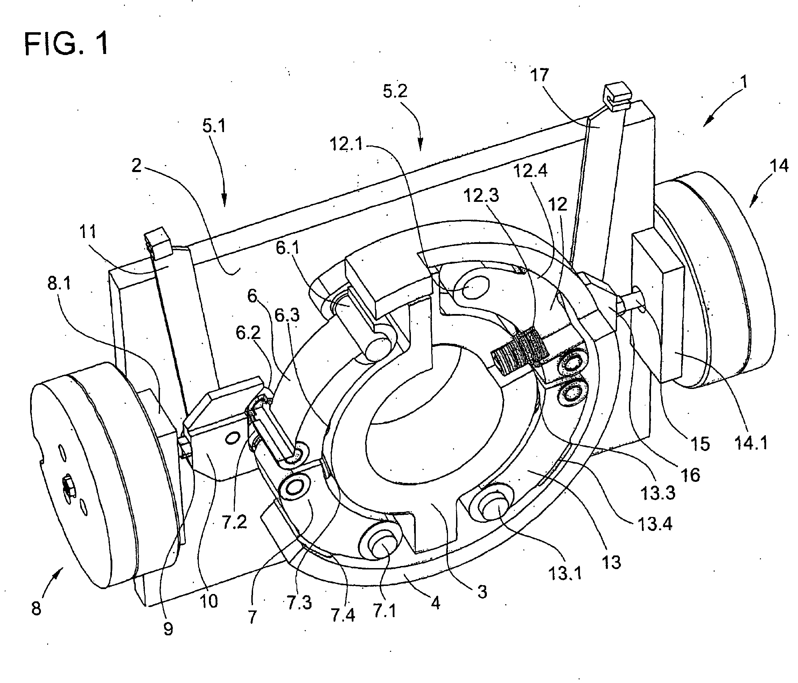

Fig. 1 zeigt eine räumliche Darstellung einer erfindungsgemässen Innenbackenbremse 1 bestehend aus einer Gehäuseplatte 2, einem Gehäusering 3, einer Bremstrommel 4 und aus zwei identisch aufgebauten Bremshälften 5.1,5.2. Die Bremstrommel 4 kann beispielsweise Teil einer Treibscheibe sein. Die linke Bremshälfte 5.1 weist eine obere Bremsbacke 6 und eine untere Bremsbacke 7 auf. Die an einem oberen Backenlager 6.1 gelagerte obere Bremsbacke 6 weist am freien Ende eine Betätigungsrolle 6.2 auf und wird mittels einer am Gehäusering 3 abgestützten Druckfeder 6.3 gegen die Bremstrommel 4 gepresst. Die obere Bremsbacke 6 ist geschnitten dargestellt, weshalb der Bremsbelag 6.4 in Fig. 1 nicht ersichtlich ist. Der Schnitt verläuft auch durch die Rollenachse 6.5, an der die Betätigungsrolle 6.2 angeordnet ist. Die untere Bremsbacke 7 ist spiegelbildlich zur oberen Bremsbacke 6 aufgebaut. Die Teile der unteren Bremsbacke sind mit folgenden Bezugszeichen versehen: Backenlager 7.1, Betätigungsrolle 7.2, Druckfeder 7.3, Bremsbelag 7.4 und Rollenachse 7.5. Die freien Enden der Bremsbacken 6,7 sind benachbart.

Zur Lüftung des Bremsbackenpaares 6,7 ist ein Aktor 8 in der Form eines Bremsmagneten vorgesehen. Der an einem mit der Gehäuseplatte 2 verbundenen Aktorsockel 8.1 angeordnete Aktor 8 wirkt mittels einer Schubstange 9 auf eine Betätigungsgabel 10 ein, an der die Betätigungsrollen 6.2,7.2 abrollend entgegen der Federkraft der Druckfedern 6.3,7.3 beaufschlagt werden. Ein Bremshebel 11 dient der manuellen Lüftung der Bremsbacken 6,7.

Die rechte Bremshälfte 5.2 ist spiegelbildlich zur linken Bremshälfte 5.1 aufgebaut. Die Teile der rechten Bremshälfte 5.2 sind mit folgenden Bezugszeichen versehen: Obere Bremsbacke 12 mit Backenlager 12.1, Betätigungsrolle 12.2, Druckfeder 12.3, Bremsbelag 12.4 und Rollenachse 12.5. Untere Bremsbacke 13 mit Backenlager 13.1, Betätigungsrolle 13.2, Druckfeder 13.3, Bremsbelag 13.4 und Rollenachse 13.5. Aktor 14 mit Aktorsockel 14.1, Schubstange 15, Betätigungsgabel 16 und Bremshebel 17.

Bei einer Linksdrehung der Bremstrommel 4 sind die Bremsbacken 6,13 ablaufend und die Bremsbacken 7,12 auflaufend. Bei einer Rechtsdrehung der Bremstrommel 4 sind die Bremsbacken 6,13 auflaufend und die Bremsbacken 7,12 ablaufend. Bei auflaufenden Bremsbacken wird die Bremswirkung verstärkt, bei ablaufenden Bremsbacken wird die Bremswirkung geschwächt.

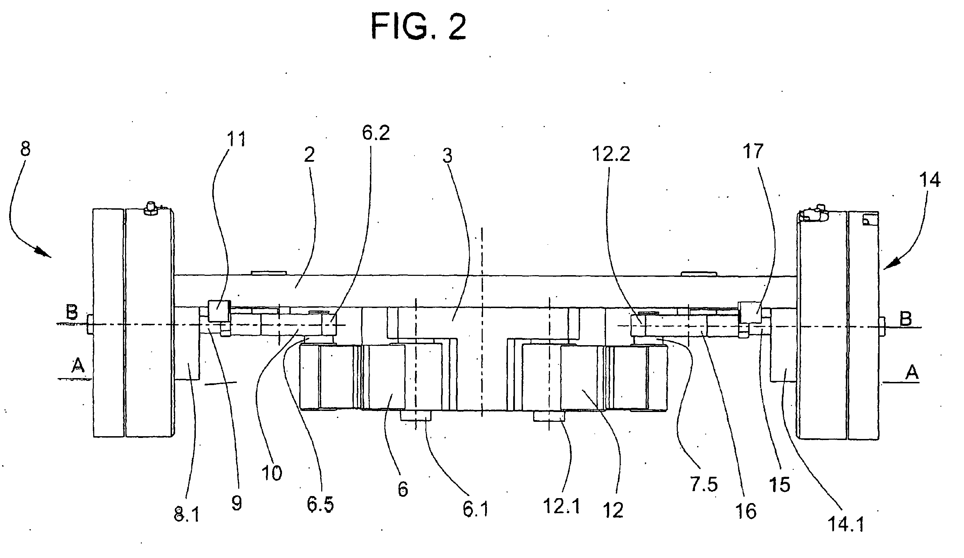

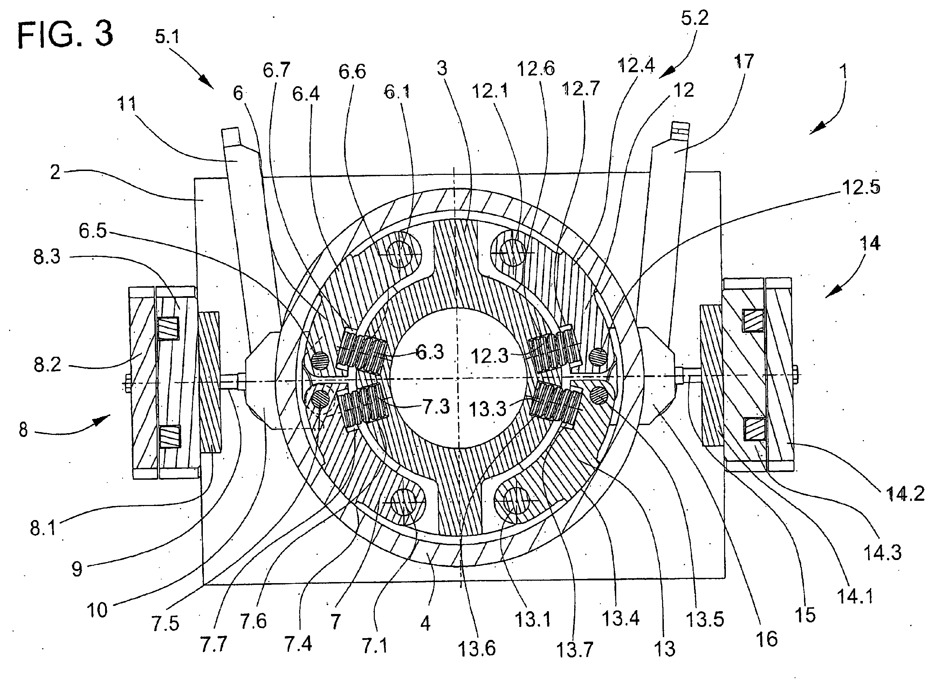

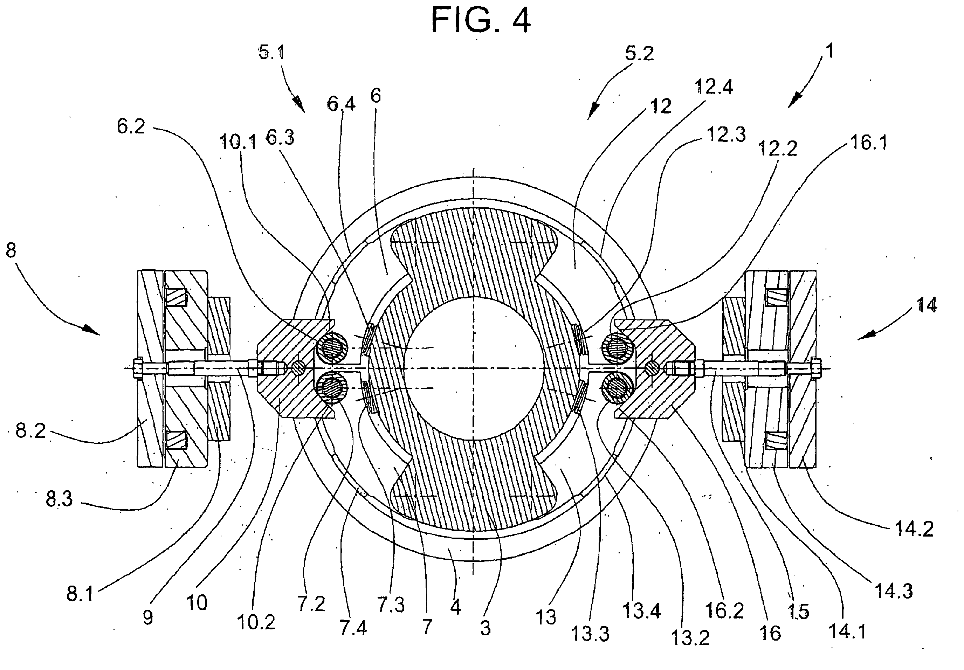

Fig. 2 zeigt eine Draufsicht der Innenbackenbremse 1 ohne Bremstrommel 4. Sichtbar sind die am Gehäusering 3 drehbar angeordneten oberen Bremsbacken 6,12 und die Aktoren 8,14 mit den Schubstangen 9,15 und die Betätigungsgabeln 10,16 zur Bremslüftung. Der Schnitt entlang der Linie A-A ist in Fig. 3 und der Schnitt entlang der Linie B-B ist in Fig. 4 dargestellt.

Fig. 3 zeigt einen Schnitt durch die Bremsbacken 6,7,12,13 und durch die Druckfedern 6.3,7.3,12.3,13.3. Die Druckfedern 6.3,7.3,12.3,13.3 sind einenends in Ausnehmungen 6.6,7.6,12.6,13.6 des Gehäuserings 3 gelagert und tauchen anderenends in Ausnehmungen 6.7,7.7,12.7,13.7 der Bremsbacken 6,7,12,13 ein. Die Druckfedern 6.3,7.3,12.3,13.3 pressen die Bremsbacken 6,7,12,13 gegen die Bremstrommel 4, wobei zwischen der Bremstrommel 4 und den Bremsbelägen 6.4,7.4,12.4,13.4 die Bremskräfte erzeugt werden.

Fig. 4 zeigt einen Schnitt durch die Aktoren 8,14, die Betätigungsgabeln 10,16 und die Betätigungsrollen 6.2,7.2,12.2,13.2. Als Aktoren 8,14 sind Bremsmagnete vorgesehen. Der Bremsmagnet 8 der linken Bremshälfte 5.1 besteht aus einer Ankerplatte 8.2 und einer am Aktorsockel 8.1 angeordneten Magnetspule 8.3. Die Ankerplatte 8.2 ist mit der Schubstange 9 verbunden, die die Bewegung der Ankerplatte 8.2 auf die Betätigungsgabel 10 überträgt. An der Betätigungsgabel 10 sind betätigungsrollenseitig je Betätigungsrolle 6.2,7.2 eine Abrollschräge 10.1, 10.2 vorgesehen. Beim Vorschieben der Betätigungsgabel 10 rollen die Betätigungsrollen 6.2,7.2 auf den Abrollschrägen 10.1, 10.2 ab, wobei die Bremsbacken 6,7 gegen die Druckfedern 6.3,7.3 gepresst werden. Dabei werden die Bremsbeläge 6.4,7.4 von der Bremstrommel 4 gelöst.

Der Bremsmagnet 14 der rechten Bremshälfte 5.2 besteht aus einer Ankerplatte 14.2 und einer am Aktorsockel 14.1 angeordneten Magnetspule 14.3. Die Ankerplatte 14.2 ist mit der Schubstange 15 verbunden, die die Bewegung der Ankerplatte 14.2 auf die Betätigungsgabel 16 überträgt. An der Betätigungsgabel 16 sind betätigungsrollenseitig je Betätigungsrolle 12.2,13.2 eine Abrollschräge 16.1, 16.2 vorgesehen. Beim Vorschieben der Betätigungsgabel 16 rollen die Betätigungsrollen 12.2,13.2 auf den Abrollschrägen 16.1,16.2 ab, wobei die Bremsbacken 12,13 gegen die Druckfedern 12.3,13.3 gepresst werden. Dabei werden die Bremsbeläge 12.4,13.4 von der Bremstrommel 4 gelöst.

Je Bremshälfte 5.1,5.2 können beispielsweise anstatt einem Bremsbackenpaar mehrere Bremsbackenpaare vorgesehen sein.

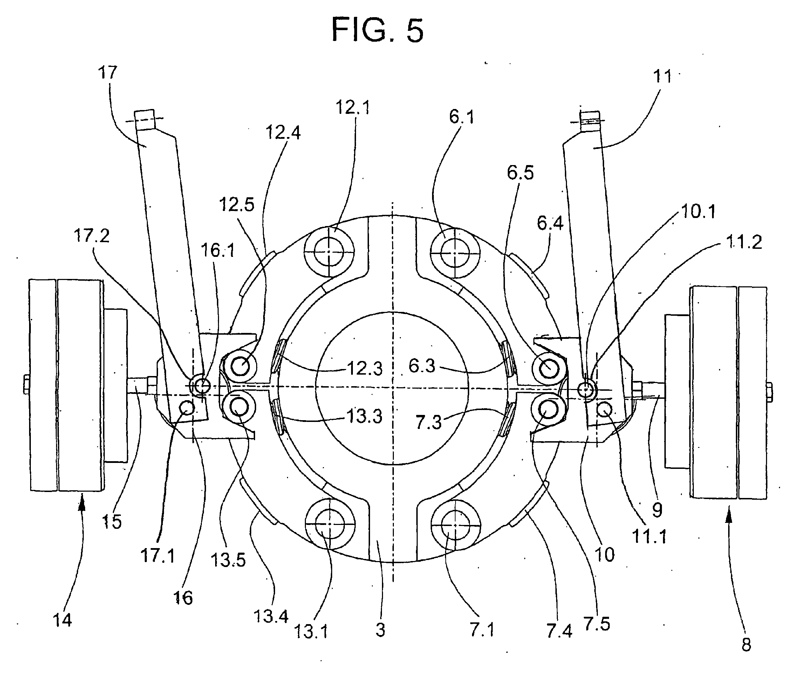

Fig. 5 zeigt eine Rückansicht der Innenbackenbremse 1. Aus Fig. 5 ist ersichtlich, wie die Bremshebel 11,17 zur manuellen Lüftung der Innenbackenbremse 1 auf die Betätigungsgabeln 10,16 einwirken. Der Bremshebel 11 ist an einer an der Gehäuseplatte 2 angeordneten Drehachse 11.1 drehbar angeordnet und hat eine halbkreisförmige Ausnehmung 11.2, in die ein Bolzen 10.1 der Betätigungsgabel 10 passt. Der Bremshebel 17 ist an einer an der Gehäuseplatte 2 angeordneten Drehachse 17.1 drehbar angeordnet und hat eine halbkreisförmige Ausnehmung 17.2, in die ein Bolzen 16.1 der Betätigungsgabel 16 passt. Der Bremshebel 17 ist in der Ruhestellung und der Bremshebel 11 ist in der Arbeitsstellung bzw. bei gelüfteter Bremse gezeigt. Bei der manuellen Bremslüftung wird der Bremshebel 11,17 um die Drehachse 11.1, 17.1 gedreht. Dabei drückt die Ausnehmung 11.2,17.2 gegen den Bolzen 10.1, 16.1, der die Betätigungsgabel 10,16 entgegen der Federkraft der Druckfedern 6.3,7.3,12.3,13.3 bewegt und die Bremsbacken 6,7,12,13 löst.

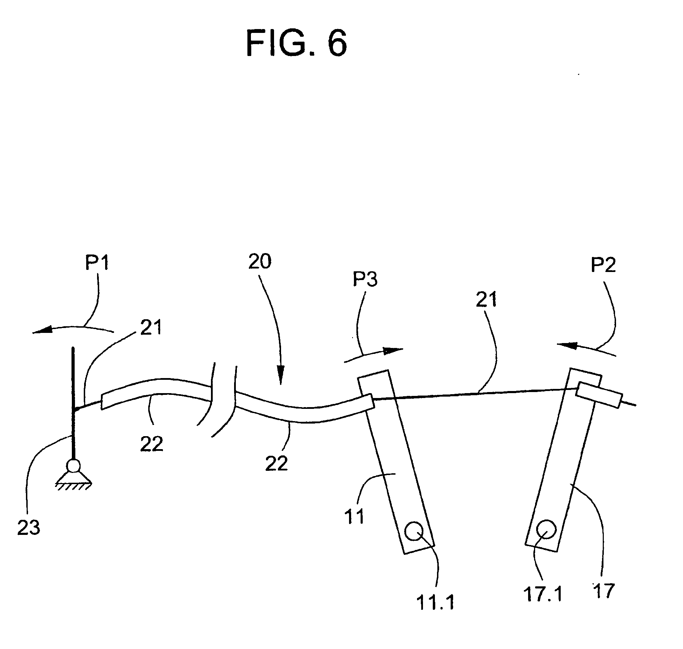

Fig. 6 zeigt eine Betätigungseinrichtung zur manuellen Lüftung der Bremsbacken 6,7,12,13. Mittels eines aus einer Seele 21 und einem Mantel 22 bestehenden Bowdenzuges 20 sind die Bremshebel 11,17 beispielsweise vom Wartungspersonal manuell betätigbar. Die Seele 21 des Bowdenzuges 20 ist mit dem freien Ende des einen Bremshebels 17 verbunden und der Mantel 22 des Bowdenzuges 20 ist mit dem freien Ende des anderen Bremshebels 11 verbunden. Durch manuelle Betätigung eines Lüfthebels 23 in Pfeilrichtung P1 wird in der Seele 21 eine Zugkraft aufgebaut. Auf dem Prinzip von Aktion = Reaktion werden dabei die beiden Bremshebel 11,17 in Pfeilrichtung P3 bzw. P2 bewegt und die Bremsbacken 6,7,12,13 gelüftet.

## Patentansprüche

1. Innenbackenbremse für einen Aufzugsantrieb mit mehr als zwei Bremsbacken (6,7,12,13), die mittels Druckfedern (6.3,7.3,12.3,13.3) beaufschlagt eine Bremskraft an einer Bremstrommel (4) erzeugen und die mittels Aktoren (8,14) lüftbar sind,
**dadurch gekennzeichnet,**
**dass** die Bremsbacken (6,7,12,13) innerhalb der Bremstrommel (4) konzentrisch zur Bremstrommel (4) angeordnet sind,
wobei jede Bremsbacke (6,7,12,13) einenends an einem eigenen Backenlager (6.1,7.1,12.1,13.1) drehbar gelagert ist und im Bremsfall mittels einer Federkraft bzw. beim Lüften der Bremse mittels einer am freien Ende der Bremsbacke (6,7,12,13) angreifenden Aktorkraft eine Drehbewegung ausführt, wobei zur Erzeugung der Aktorkraft je Bremsbackenpaar (6,7,12,13) ein Aktor (8,14) vorgesehen ist.

2. Innenbackenbremse nach Anspruch 1,
**dadurch gekennzeichnet,**
**dass** die freien Enden der ein Bremsbackenpaar bildenden Bremsbacken (6,7,12,13) benachbart sind.

3. Innenbackenbremse nach den Ansprüchen 1 oder 2,
**dadurch gekennzeichnet,**
**dass** an den freien Enden der Bremsbacken (6,7,12,13) Betätigungsrollen (6.2,7.2,12.2,13.2) angeordnet sind, die paarweise mittels einer Betätigungsgabel (10,16) der Aktoren (8,14) beaufschlagbar sind.

4. Innenbackenbremse nach Anspruch 3,
**dadurch gekennzeichnet,**
**dass** die Betätigungsgabel (10,16) je Batätigungsrolle (6.2,7.2,12.2,13.2) eine Abrollschräge (10.1,10.2,16.1,16.2) aufweist, an denen die Batätigungsrollen (6.2,7.2,12.2,13.2) beaufschlagbar sind.

## Claims

1. Internal shoe brake for a lift drive with more than two brake shoes (6, 7, 12, 13), which loaded by means of compression springs (6.3, 7.3, 12.3, 13.3) generate a braking force at a brake drum (4) and can be released by means of actuators (8, 14), **characterised in that** the brake shoes (6, 7, 12, 13) are arranged within the brake drum (4) concentrically with respect to the brake drum (4), wherein each brake shoe (6, 7, 12, 13) is rotatably mounted at one end at an own shoe bearing (6.1, 7.1, 12.1, 13.1) and in the case of braking executes a rotational movement by means of a spring force or, in the case of release of the brake, by means of an actuator force engaging at the free end of the brake shoe (6, 7, 12, 13), wherein for producing the actuator force a respective actuator (8, 14) is provided for each brake shoe pair (6, 7, 12, 13).

2. Internal shoe brake according to claim 1, **characterised in that** the free ends of the brake shoes (6, 7, 12, 13) forming a brake shoe pair are adjacent.

3. Internal shoe brake according to claim 1 or 2, **characterised in that** actuating rollers (6.2, 7.2, 12.2, 13.2), which can be loaded in pairs by means of an actuating fork (10, 16) of the actuators (8, 14), are arranged at the free ends of the brake shoes (6, 7, 12, 13).

4. Internal shoe brake according to claim 3, **characterised in that** the actuating fork (10, 16) has for each actuating roller (6.2, 7.2, 12.2, 13.2) a rolling path chamfer (10.1, 10.2, 16.1, 16.2) at which the actuating rollers (6.2, 7.2, 12.2, 13.2) can be loaded.

## Revendications

1. Frein à mâchoires intérieures pour un entraînement d'ascenseur, avec plus de deux mâchoires (6, 7, 12, 13) qui, en étant contraintes à l'aide de ressorts de compression (6.3, 7.3, 12.3, 13.3), produisent une force de freinage sur un tambour de frein (4) et qui sont aptes à être desserrées à l'aide d'actionneurs (8, 14),
**caractérisé en ce que** les mâchoires (6, 7, 12, 13) sont disposées à l'intérieur du tambour de frein (4) de manière concentrique par rapport à celui-ci, étant précisé que chaque mâchoire (6, 7, 12, 13) est montée en rotation, à une extrémité, sur un palier de mâchoire individuel (6.1, 7.1, 12.1, 13.1) et décrit un mouvement de rotation en cas de freinage à l'aide d'une force de ressort ou lors d'un desserrage du frein à l'aide d'une force d'actionnement agissant sur l'extrémité libre de la mâchoire (6, 7, 12, 13), et étant précisé qu'il est prévu pour produire la force d'actionnement, sur chaque paire de mâchoires (6, 7, 12, 13), un actionneur (8, 14).

2. Frein à mâchoires intérieures selon la revendication 1, **caractérisé en ce que** les extrémité libres des mâchoires (6, 7, 12, 13) formant une paire sont voisines.

3. Frein à mâchoires intérieures selon les revendications 1 ou 2, **caractérisé en ce qu'**il est prévu sur les extrémités libres des mâchoires (6, 7, 12, 13) des rouleaux d'actionnement (6.2, 7.2, 12.2, 13.2) qui sont aptes à être contraints par paires à l'aide d'une fourche d'actionnement (10, 16) des actionneurs (8, 14).

4. Frein à mâchoires intérieures selon la revendication 3, **caractérisé en ce que** la fourche d'actionnement (10, 16) comporte pour chaque rouleau d'actionnement (6.2, 7.2, 12.2, 13.2) un biseau de roulement (10.1, 10.2, 16.1, 16.2) au niveau duquel le rouleau d'actionnement correspondant (6.2, 7.2, 12.2, 13.2) peut être contraint.
